# EUROPEAN PATENT SPECIFICATION

(11) **EP 4 472 832 B1**
(45) Date of publication and mention of the grant of the patent: **10.12.2025**
(21) Application number: 23704415.1
(22) Date of filing: 03.02.2023
(51) Int. Cl.: B29C 70/54, B29C 70/44

(54) **CONCAVITY DIAPHRAGM FORMING**
BILDUNG EINER HOHLRAUMMEMBRAN
MISE EN FORME DE MEMBRANE À CONCAVITÉ

(30) Priority: 03.02.2022 GB 202201407
(43) Date of publication of application: 11.12.2024
(73) Proprietor: McLaren Automotive Limited, Woking, Surrey GU21 4YH (GB)
(72) Inventor: BELCHER, Stephen, Woking, Surrey GU21 4YH (GB)
(74) Representative: Slingsby Partners LLP
(86) International application number: PCT/GB2023/050249
(87) International publication number: WO 2023/148503

(56) References cited:
- EP-A1- 2 219 842
- WO-A1-2021/023979

## Description

This invention relates to a method for forming a fibre article about a former having a forming surface with a concavity.

An increasing number of relatively large components are being made by moulding. Many of these are composite components, typically fibre-reinforced resin components made of systems such as carbon-fibre/epoxy. Some examples are tubs for automobiles, wings for aircraft, blades for wind turbines and masts for yachts.

One method of forming moulded components is diaphragm forming. In diaphragm forming, a flexible moulding blank which is to be shaped is positioned between an elastic diaphragm and a shaped, rigid mould tool. Then a vacuum is drawn between the diaphragm and the mould tool. This pulls the diaphragm into contact with the mould, and eventually causes the blank to be held in close conformity with the shape of the mould tool. Then the blank can be set in shape, for example by applying heat to the mould tool so as to cure a resin that is infused into the blank. Once the blank is set in shape the vacuum can be released and the blank can be removed. It is possible to position a diaphragm on either side of the mould blank, and to additionally draw a vacuum between the two diaphragms. This allows the blank to be laid up conveniently on top of the lower diaphragm.

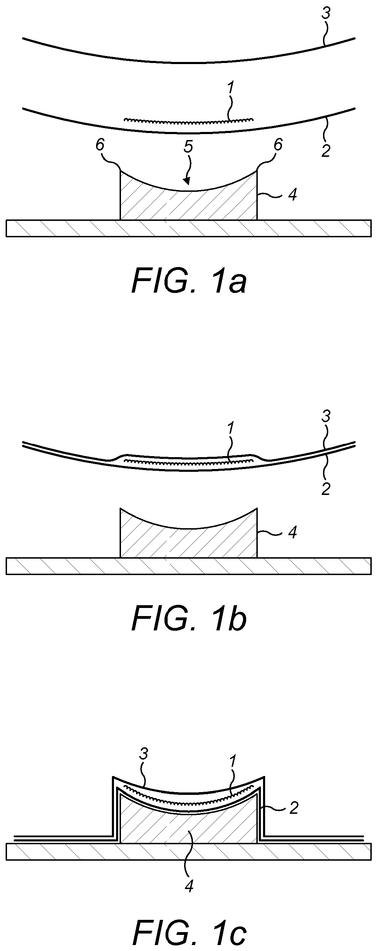

Figure 1 shows steps in one type of diaphragm forming process. At figure 1a, a mat 1 of reinforcing fibres impregnated with a heat-activated adhesive is located between two diaphragms 2, 3. A shaped former 4 is located under the diaphragms. The mat 1 is positioned so that it is directly above the former. (See figure 1a). A vacuum is drawn between the diaphragms to consolidate the mat 1 and hold it tight between the diaphragms. (See figure 1b). Then a vacuum is drawn in the region between the lower diaphragm 3 and the former. This causes the diaphragms and hence the mat to conform to the former. (See figure 1c). The mat is heated to cause it to set in the shape of the former's surface. Then the vacuums can be released and the shaped mat removed. This process can be used to make fibre preforms for use in a subsequent resin transfer moulding step.

In practice, it can be difficult to make the mat conform smoothly to the surface of the former. A particular problem arises in the situation shown in figure 1, where there is a hollow 5 in the former which is contacted by the lower diaphragm after it has contacted the prominence 6 that surround the hollow 5. In this situation, as the lower diaphragm makes contact with the prominence 6 the mat can be pinned at the points where it overlies the prominence. During the drawing of the vacuum the lower diaphragm may not be pulled fully into the hollow. This can occur for at least two reasons. The first is that the lower diaphragm seals against the prominence meaning the vacuum cannot be correctly drawn in the hollow region. The second is that as the diaphragm is pinned on the prominence it cannot be fully drawn into the hollow and so ends up bridging the hollow leading to unacceptable forming of the preform.

It would therefore be desirable to have an improved method for having reinforcement material conform to a former.

EP2219842 A1 describes a forming tool for and a method of making a three-dimensional composite component using double diaphragm forming.

According to a first aspect of the present invention there is provided a method for forming a fibre article as defined in claim 1 the method comprising: providing a former having a contoured forming surface, the forming surface comprising a plurality of concavities, each surrounded by a prominence and a part of the prominence of one concavity is shared with a part of a prominence of another cavity; locating a fibre preform between a first diaphragm and a second diaphragm; drawing a vacuum between the first and second diaphragms so as to hold the preform captive between the diaphragms; displacing the second diaphragm towards the former so as to bring the second diaphragm into contact with the prominence of the former to seal against the prominence to form a first region defined by the concavity and a portion of the second diaphragm and a second region defined by the forming surface outside of the concavity and the second diaphragm; drawing a vacuum in the first region so as to bring part of the second diaphragm into conformity with the concavity; subsequent to drawing the vacuum in the first region, drawing a vacuum in the second region so as to bring part of the second diaphragm into conformity with the forming surface outside of the concavity; and setting the preform in its configuration.

The former may comprise a base and the prominence may be further from the base than the concavity. The prominence may have a profile which varies in distance from the concavity. Bringing the second diaphragm into contact with the prominence of the former may cause the second diaphragm to bridge over the concavity to form the first region.

The former may comprise at least one channel running through the former from the concavity, and drawing a vacuum in the first region may comprise drawing the vacuum through the at least one channel. The method may comprise locating the former on a forming platform, the forming platform may comprise at least one orifice, so that the at least one channel is in fluid communication with the at least one orifice; wherein drawing a vacuum in the first region may comprise drawing the vacuum through the at least one orifice.

The former comprises a plurality of concavities each surrounded by a prominence; displacing the second diaphragm towards the former may comprise displacing the second diaphragm towards the former so as to bring the second diaphragm into contact with the prominences of the former to seal against the prominences to form respective first regions defined by the respective concavity and a portion of the second diaphragm; and the method may comprise drawing a vacuum in each first region in turn so as to bring part of the second diaphragm into conformity with the concavities. At the locating step the first diaphragm may be offset from the forming surface. The preform may comprise a heat-activatable binder and the method may comprise: when the precursor located between the first and second diaphragms applying heat to the precursor; and ceasing to apply heat to the precursor prior to the said displacing step. The fibre preform may comprise multiple sheets of fibre material laminated into a stack. The or each sheet of fibre material may be a sheet of woven fibre material. The diaphragms may be elastic. The preform may be part of a structural part of a vehicle. The preform may be part of a structural part of an automobile and the structural part is an automobile tub. The preform may be part of a structural part of an aircraft.

The former may comprise a base and the prominences may be further from the base than the concavity. The prominences may have a profile which varies in distance from the concavities. Bringing the second diaphragm into contact with the prominences of the former may cause the second diaphragm to bridge over the concavities to form the first regions.

The former may comprise at least one channel running through the former from each respective concavity, and drawing a vacuum in each respective first region may comprise drawing the vacuum through the at least one channel. The method may comprise locating the former on a forming platform, the forming platform may comprise at least one orifice, so that the at least one channel is in fluid communication with the at least one orifice; wherein drawing a vacuum in each respective first region may comprise drawing the vacuum through the at least one orifice.

The former comprises a plurality of concavities each surrounded by a prominence; displacing the second diaphragm towards the former may comprise displacing the second diaphragm towards the former so as to bring the second diaphragm into contact with the prominences of the former to seal against the prominences to form respective first regions defined by the respective concavity and a portion of the second diaphragm; and the method comprises drawing a vacuum in each first region in turn so as to bring part of the second diaphragm into conformity with the concavities. At the locating step the first diaphragm may be offset from the forming surface. The preform may comprise a heat-activatable binder and the method may comprise: when the precursor located between the first and second diaphragms applying heat to the precursor; and ceasing to apply heat to the precursor prior to the said displacing step. The fibre preform may comprise multiple sheets of fibre material laminated into a stack. The or each sheet of fibre material may be a sheet of woven fibre material. The diaphragms may be elastic. The preform may be part of a structural part of a vehicle. The preform may be part of a structural part of an automobile and the structural part is an automobile tub. The preform may be part of a structural part of an aircraft.

The present invention will now be described by way of example with reference to the accompanying drawings. In the drawings:
Figure 1 shows stages in a diaphragm forming process.
Figure 2 shows a diaphragm forming apparatus.
Figure 3 shows a part to be formed.
Figure 4 shows a former for shaping the part of figure 3.
Figure 5 shows, in cross-section, stages in a double-diaphragm process for shaping the part of figure 3.
Figure 6 shows a second former for shaping a part.

The following description is presented to enable any person skilled in the art to make and use the invention, and is provided in the context of a particular application. Various modifications to the disclosed embodiments will be readily apparent to those skilled in the art.

The present invention relates to a method as defined in claim 1. The below embodiments defining a single concavity are outside of the scope of the claimed invention.

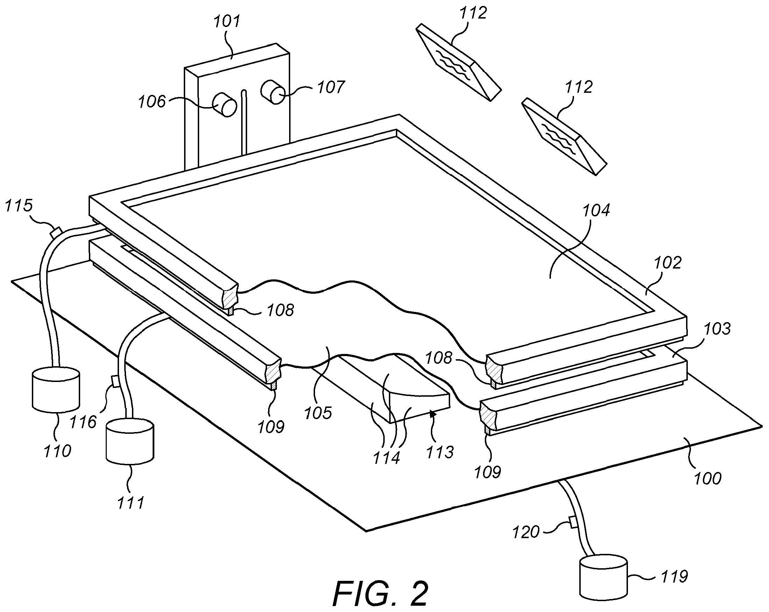

Figure 2 is a cut-away view of a diaphragm forming apparatus. The apparatus comprises a base 100. The base 100 may also be known as a forming platform. In this example the base is a horizontal generally flat surface, but it could be in any orientation and could be non-flat. A support tower 101 extends away from the base. Figure 2 shows a single support tower but there could be multiple towers or support mechanisms of other forms as required for stability. The support tower 101 supports a pair of frames 102, 103. Each frame is a rigid structure defining an opening within it. The frames are generally planar and are arranged so that they are generally parallel to the base 100. Diaphragms 104, 105 are attached to respective ones of the frames so as to close the opening in the respective frame. Each diaphragm is attached in an air-tight way around its periphery to the respective frame. The diaphragms are formed of flexible and optionally elastic sheet material. The frames are mounted on the support tower 101 so that they can be moved towards and away from the base 100 by means of motors 106, 107. A seal 108 is provided on one or both of the frames so that when the frames are moved so as to abut each other the volume between the diaphragms can be sealed in an air-tight manner. A seal 109 is provided on frame 103 and/or on base 100 so that when frame 103 is moved so as to abut the base the volume between the base and the diaphragm 105 carried by frame 103 can be sealed in an air-tight manner. The seals could be located in any suitable way. A former 113 is located on the base.

A first vacuum pump 110 is coupled to one of the frames through an opening which, when the frames are abutting each other, gives access to the volume between the diaphragms. A second vacuum pump 111 is coupled to one of the frames or to the base through an opening which, when the frame 103 is abutting the base, gives access to the volume between diaphragm 105 and the base that surrounds the former 113. A third vacuum pump 119 is coupled to the base through an opening which, gives access to at least one hole in the former 113 to permit a vacuum to be drawn from selected regions of the former 113 as described herein in more detail.

Heaters 112 are arranged to provide heat the diaphragms. The heaters may be arranged to heat the upper diaphragm. The heaters may be arranged to heat the lower diaphragm. They could be removable from the space between the closer diaphragm 105 to the base 100 and the base itself to permit the closer diaphragm to be moved to meet the base. The heaters 112 may be in the form of radiant heat heaters which do not directly contact the diaphragms to heat them. The heaters 112 may be in the form of heating plates which directly contact the diaphragms to heat them. A combination of different heaters 112 may be used to heat the diaphragms at the appropriate stage of the forming process.

The diaphragms are formed of a pliable sheet material. One or both of the diaphragms may be formed of an elastic material. The diaphragms may, for example, both be formed of elastomeric sheet, for example rubber or silicone sheet. The diaphragms may be of any suitable thickness, for example a thickness in the range from 0.25 to 5.0mm. Each diaphragm may be held taut in its respective frame. Alternatively, each diaphragm may be held loosely in its frame. As a consequence, it may sag somewhat at the outset of the forming process.

The base or bed 100 is generally flat. Optionally, grooves may be provided in the bed or scrim may be laid across the bed to improve the drawing of a vacuum uniformly across the bed and the former. Pump 111 and/or pump 119 could draw their vacuums through orifices in the bed.

In operation, a precursor, which may be a mat of reinforcing material impregnated with a heat activated adhesive, can be placed between the diaphragms. The precursor may be a stack of layers of reinforcing material. Then the diaphragms can be moved together by using motor 106 and/or motor 107 to reposition one or both of the frames. Then a vacuum is drawn between the diaphragms by using pump 110. Then the diaphragms can be moved in unison by using motors 106 and 107 so as to bring frame 103 into a position where it abuts the base 100. The vacuum between the frames is maintained. This pushes diaphragm 105 into partial conformity with the exposed surface 114 of the former 113. The precursor is located at a region of the diaphragms such that it too is forced to take up the shape of the former. Because the preform is held to diaphragm 105 by diaphragm 104, the preform is also partially conformed to the exposed surface 114. Then a vacuum is drawn between diaphragm 105 and the base 100. This brings diaphragm 105 into full conformity with the exposed surface 114. At some point up to this stage the precursor has been heated by heating plates in order to activate the adhesive. Then the adhesive is permitted to set, fixing the precursor in a shape mimicking that of at least part of the exposed surface 114 of the former. Then the vacuums are released by activating valves 115, 116 in the supply lines from pumps 110, 111, the frames are moved apart and the part formed from the precursor is removed.

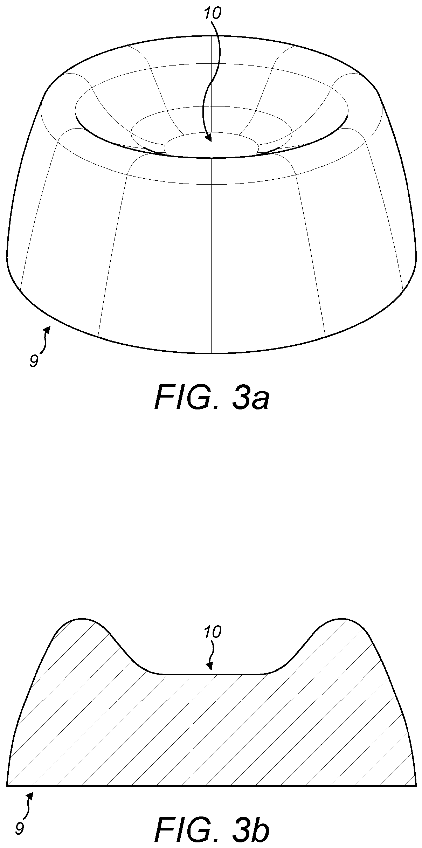

Figures 3a and 3b show a part 9 that may be desired to be formed using this method. The part has a concave region 10 which is concave upwards in the orientation of figure 3a and 3b. Figure 3b shows a cut-through view of the part 9 to better show the concavity of the part 9.

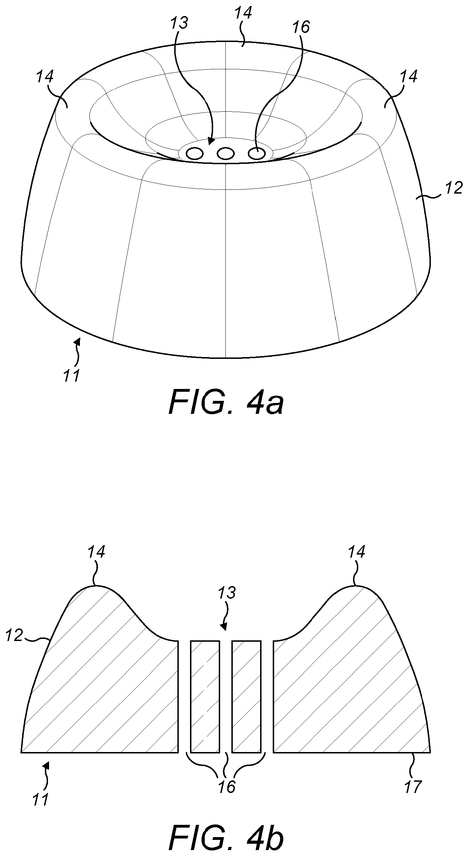

Figures 4a and 4b show a former or tool 11 suitable for forming the part of figures 3a and 3b in a diaphragm forming process. The former is a rigid block or shell having a forming surface 12. The forming surface has a shape that matches the desired shape of part 9. The forming surface has a concave region 13 which is concave upwards in the orientation of figures 4a and 4b and is intended to shape the concave region 10 of the part 9. Surrounding the concave region 13 is a prominence 14. The prominence 14 is higher than the concave region 13 relative to the base 17 of the former 11. The prominence 14 is further from the base 17 than the concave region 13. The base 17 being the part of the former 11 that rests on the base 100 of the diaphragm forming apparatus when in use. The prominence 14 completely surrounds the concave region 13. In this way, the prominence 14 forms a ridge around the concave region 13. Whilst the prominence 14 is shown with having the same height all around the periphery of the concavity 13, it will be understood that the prominence 14 may have variable height relative to the concavity 13. Thus, in this instance the prominence has a profile which varies in distance from the concavity. However, the prominence 14 is taller than the concavity 13 at all points surrounding the concave region 13.

The former comprises external sides which run from the prominence 14 to the base of the former. Thus, the prominence 14 projects from the base of the former.

During forming of the preform 9, the diaphragm closest to the prominence 14 comes into contact with the prominence 14 and bridges over the concave region. The diaphragm can also end up sealing to the prominence 14 meaning that it is difficult to draw a vacuum in this area. This can cause problems in the forming process. A double-diaphragm forming process is described herein which addresses this problem.

The former 11 comprises one or more channels 16 that pass through the former 11 from the base 17 to the concave region 13. These channels 16 permit air to flow between the concave region 13 and the underside 17 of the former 11. The channel(s) 16 are through-holes that pass through the former 11. The channel(s) 16 pass through the body of the former 11. These channel(s) 16 can be used in the forming process described herein to address the problem of the diaphragm bridging the concavity.

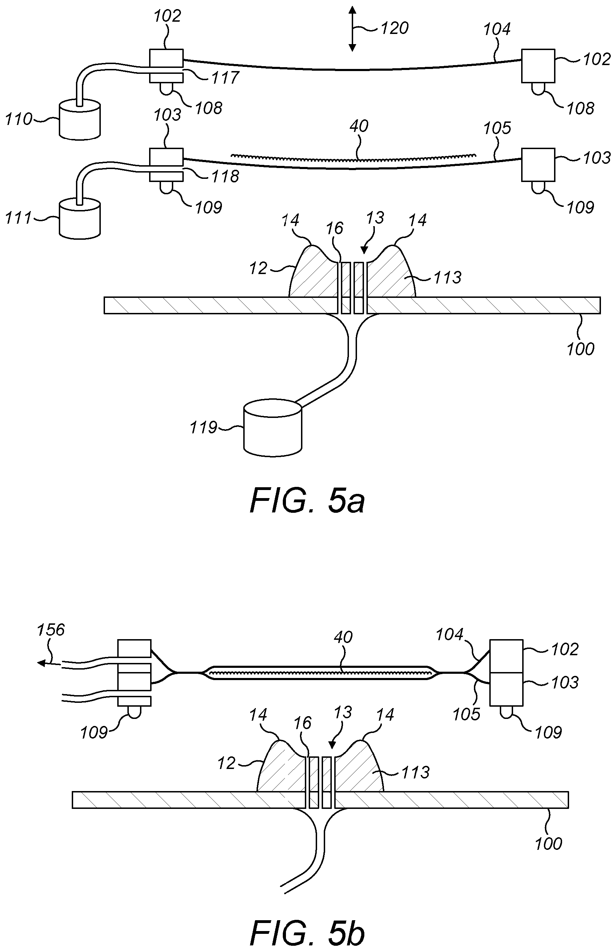

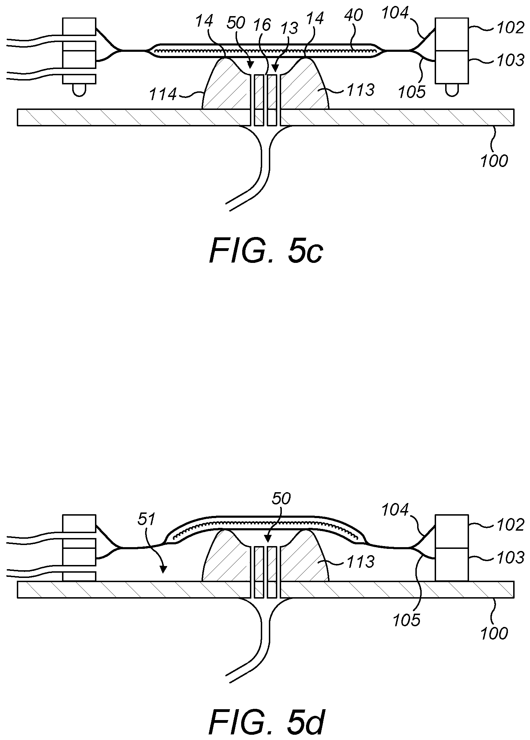

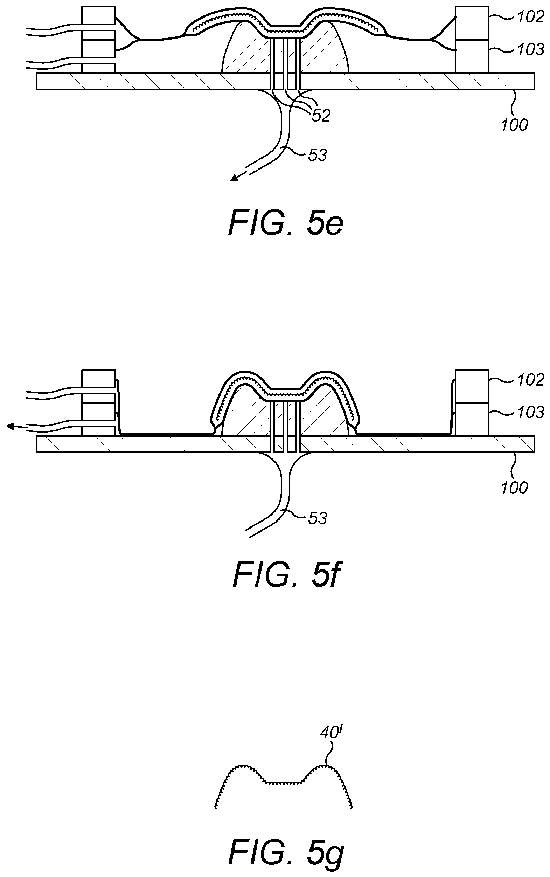

Figure 5 shows the stages in the forming of the part 9 by a double-diaphragm process, using the apparatus of figure 2.

In a first step (figure 5a) the two diaphragms 104, 105 are spaced apart from each other and from the former 113. Each diaphragm is suspended from a respective frame 102, 103. The operating direction 120 in which the frames can be moved is generally perpendicular to the diaphragms, and the former 113 is positioned on a bed 100 offset from the diaphragms in the operating direction. The former is located on the bed with its forming surface 114 facing the closer diaphragm 105. The prominence 14 are nearer to the closer diaphragm than is the hollow defined by the concave region 13.

As shown in figure 5a, precursor 40 is located between the diaphragms. The precursor is formed of sheet material. It may comprise one or more layers of material. One or more such layers may, for example, be of woven or knitted fabric. One or more such layers may, for example, be of loose or bundled fibres, for example runs of fibre or tow. One or more such layers may, for example, be non-fibrous material, for example biaxially uniform sheet. A fabric layer may comprise runs of reinforcing fibre which are interwoven, stitched or fused together. Such stitching may be by means of a secondary fibre material having a lower tensile strength per unit volume than the material of the reinforcing fibre. The stitching fibre may nevertheless be substantially inextensible. The reinforcing fibre may, for example, be carbon fibre, glass fibre or a polymer fibre such as an aramid fibre. Layers of loose or bundled fibres may comprise fibres of one or more such materials. As an example, the precursor may comprise multiple sheets of carbon fibre fabric or mat. Each of those sheets may comprise carbon fibre runs in multiple non-parallel directions. For example, the runs in a single sheet may be offset at 90°, 60° or 45° to each other. The sheets may be arranged one on top of the other so that the run directions in one sheet are offset from the or each run direction in the or each adjacent sheet. When the precursor comprises multiple sheets they may be tacked together by adhesive or by mechanical bonding elements such as staples, studs, clips or stitches to help retain them in alignment with each other.

The precursor is configured so that it can be set in shape so as to adopt the shape of the forming surface. This may be done in any suitable way. For example, one or more layers of the precursor may comprise thermoplastic material. The precursor may then be heated (e.g. by heaters 112) before and/or whilst in contact with the former so as to raise the thermoplastic material above its softening temperature (e.g. for some materials the glass transition temperature), and then permitted to cool whilst in contact with the former so as to set the thermoplastic material in shape. Alternatively, one or more layers of the precursor may comprise a heat activated adhesive. The precursor may then be heated before and/or whilst in contact with the former so as to cause the adhesive to set the precursor in shape. Alternatively, one or more layers of the precursor may be of a plastically deformable material so that pulling the precursor against the former causes plastic deformation of the plastically deformable material. One convenient approach is for the precursor to comprise a layer of fabric comprising fibres, and for those fibres to be coated with a thermosetting adhesive. The precursor may comprise one or more sheets of dry fabric. The precursor may comprise a dry fibre binder which may be inherently tacky or may be heat-activatable (e.g. thermoplastic or thermosetting).

The precursor is located between the diaphragms at a location such that, when the diaphragms are moved to the former as will be described below, it will be located at the shaping surface 114. Consequently, it can be pressed to the shape of the shaping surface 114.

If the diaphragms are generally horizontal then the precursor can be laid on the lower diaphragm, as shown in figure 5a. The precursor may be tacked to one of the diaphragms with a temporary adhesive. That may help hold it in place if the diaphragms are not horizontal.

In a preferred configuration, the precursor comprises multiple sheets which are coated at least partially with a binder which can help to hold them together in a stack. The binder could be in powder or liquid form, or in the form of an adhesive sheet. In the process of laying up the sheets, at last some of the sheets may be coated on at least one side with the binder. Then, when the sheets are laid up there can be binder between the sheets. Preferably, the binder is disposed on the sheets such that the binder does not come into contact with the diaphragms. This can avoid degradation of the diaphragms.

There is an outlet 117 through frame 102. Pump 110 is coupled to that outlet. Seal 108 can render the region between the diaphragms air-tight when the frames are positioned against each other, except for outlet 117. The seal 108 may, for example, be a rubber bead. Pump 110 could alternatively (or in addition) be coupled through frame 103 and/or could be attached to a connector in one of the diaphragms.

As shown in figure 5b, in the next step of the process the diaphragms 104, 105 are brought together by moving at least one of the frames so as to bring the frames into sealing engagement. Then a vacuum is drawn (as shown by arrow 156) between the diaphragms by means of pump 110. This pulls the diaphragms together and holds the precursor securely captive between the diaphragms.

There is an outlet 118 through frame 103. Pump 111 is coupled to that outlet. Seal 109 can render the region between the closer diaphragm 105 and the bed 100 air-tight when the closer frame 103 is positioned against the bed, except for outlet 118. The seal 109 may, for example, be a rubber bead.

Heat is applied to the diaphragms, for example using heaters 112 and optionally other heaters provided on the forming apparatus. Heat is transferred through the diaphragms to the precursor. This can activate the binder of the precursor. Typically the binder may become active in the region of 80°C. Preferably the precursor is heated to between 70°C and 100°C. Preferably the precursor is heated such as to activate the binder.

Conveniently, heat is applied to the precursor to bring it to a temperature that is such as to activate a component of the precursor. The component of the precursor is activated such that on subsequently cooling from that temperature it will at least partially rigidify the precursor. The heat is applied when the precursor is not held in conformity - which may be partial or full conformity - with the mould. Then the application of heat to the precursor, e.g. from one or more electrical heaters or heating plates, is ceased or substantially ceased prior to the bringing of the precursor into partial or full conformity with the mould surface. A measure having the effect of cooling the precursor may be commenced after the precursor is fully in conformity with the mould. That may, for example, be forcing air to move past the precursor.

The vacuum may be drawn before or after the precursor is heated. In one convenient process, a first level of vacuum is drawn between the diaphragms whilst the precursor is being heated. Once the precursor has reached a predetermined temperature and/or state, e.g. with the binder activated, the heating can be stopped. Then a second, greater level of vacuum can be drawn. The second level of vacuum may, for example, be approximately 1Bar below ambient pressure. The second level of vacuum may be drawn with the lower diaphragm in contact with the mould, as described further below.

The frames 102, 103 are moved so as to bring the closer diaphragm 105 into contact with the forming surface 114. In this example, the mould surface has a concavity in all axes, as represented by the cut-through view of the mould surface. In this example, the lower diaphragm 105 first contacts the prominence 14. (See figure 5c). Then, as shown in figure 5d, the frames are moved so that the closer frame 103 to the bed is brought into sealing engagement with the bed. At this stage, although the periphery of the closer diaphragm 105 is closer to the bed in the operating direction 120 than is the deepest part of the concavity 13 of the forming surface 114, the closer diaphragm 105 is held away from the deepest part of the concavity by the prominence 14.

The holding away of the closer diaphragm 105 from the concavity by the prominence 14 forms a first region 50. The first region 50 is defined by the concavity 13 and a portion of the closer diaphragm 105. The first region 50 is defined by portion of the forming surface which forms the concavity 13 and a portion of the closer diaphragm 105. The portion of the closer diaphragm 105 is that part which is within where the closer diaphragm 105 contacts with the prominence 14.

As shown in figure 5d, a second region is formed between the second diaphragm and the forming surface 114. The second region is also defined by the bed 100 in the regions where the former is not present. The second region 51 is separate from the first region 50.

In moving the diaphragms to the position shown in figure 5d, the closer diaphragm 105 seals against the prominence 14. Therefore, there is substantially no airflow permitted directly between the first region 50 and the second region 51 when the diaphragms are pulled against the bed.

The frames may be moved by any suitable mechanism. For example, they may be driven to move by hydraulic actuators or electric motors to move. Guideways may be provided to guide the motion of the frames.

Next, using pump 119 a vacuum is drawn in between the concavity and the closer diaphragm 105. (Figure 5e). In this way, a vacuum is drawn within the first region 50. This pulls the closer diaphragm 105 into conformant uniform contact with the part of the forming surface 114 defining the concavity 30. The vacuum is drawn in the first region through the channels 16 that run through the forming tool 113. The bed 100 has orifices 52 which are connected to pump 119. The forming tool 113 is positioned so that the orifices 52 are in fluid communication with the channels 16 of the forming tool 113. The channels 16 are sealed to the orifices 52 so that the vacuum that is drawn in the first region does not affect the air pressure in other regions, such as the second region 51. The channels 16 are sealed to the orifices 52 so that the vacuum is drawn only in the first region 50. The forming tool 113 may be provided with one or more manifolds which seal the against the orifices 52.

As discussed herein, the bed 100 may be provided with a plurality of orifices 52. The bed 100 may be configurable as to which orifices 52 are connected to vacuum pump 119 to draw the vacuum in the first region 50 and as to which orifices 52 are connected to vacuum pump 111 to draw the vacuum in the second region 51. In this example, a first set of orifices 52 are connected to channels 16. A second set of orifices 52 outside the perimeter of the forming tool 113. The first set can therefore draw the vacuum in the first region 50 and the second set can therefore draw the vacuum in the second region 51.

The precursor 40 has been positioned so that it is adjacent to the region of the closer diaphragm 105 that is in contact with the forming surface 114. Because the precursor is held to the closer diaphragm by the vacuum between the two diaphragms, the precursor is also held in conformity with the shape of portion of the forming surface 114 which forms the concavity 30. As shown in figure 5e, the drawing of the vacuum in the first region 50 before a vacuum is drawn in the rest of the area within the closer diaphragm 105 causes the preform 40 to conform to the shape of the concavity 30. The diaphragms can flow into the concavity 30 because they are not being held tight by a vacuum over the whole of the region inside the closer diaphragm 105. This is contrasted with the case where one vacuum is between the closer diaphragm 105 and the base where the closer diaphragm 105 gets pinched against the prominence 14 and so does not flow into the concavity 30. Undertaking this first vacuum step is therefore advantageous in permitting the reliable formation of preforms that have a concave element to their shape.

Next, using pump 111 a vacuum is drawn between the bed 100 and the closer diaphragm 105 in the second region. (Figure 5f). This pulls the closer diaphragm 105 into conformant uniform contact with the forming surface 114 across the whole of the preform 40. The precursor 40 has been positioned so that it is adjacent to the region of the closer diaphragm 105 that is in contact with the forming surface 114. Because the precursor is held to the closer diaphragm by the vacuum between the two diaphragms, the precursor is also held in conformity with the shape of the forming surface 114.

The precursor is then set in shape by appropriate means. For example, if the precursor is thermoplastic and has previously been heated then it is permitted to cool. Fans may be arranged to play on the upper and/or lower diaphragm whilst the precursor is cooling. This can increase the rate of cooling.

Once the precursor has been set in shape the vacuums are released, the frames returned to the position shown in figure 5a and the set body is removed from the apparatus as shown at 40' in figure 5f.

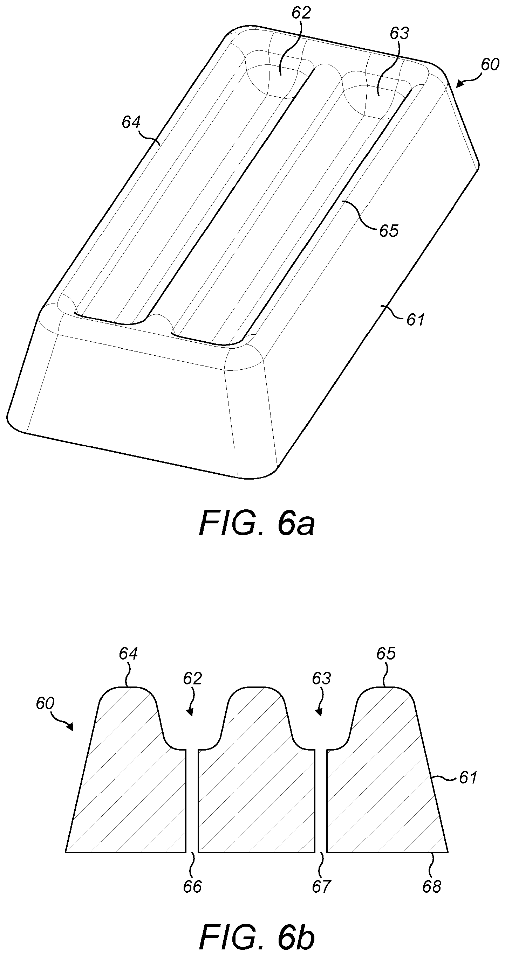

As shown in figures 6a and 6b, according to the invention, the former 60 comprises more than one concavity.

Figure 6b is a cut through view of the former 60 showing in more detail the shape of the forming surface 61 of the former 60. The former 60 shown in figures 6a and 6b comprises two concavities 62, 63. Each concavity is surrounded by a prominence 64, 65. As can be seen in figure 6a, part of the prominence of one concavity **is** shared with part of the prominence of another concavity. Each concavity 62, 63 may comprise at least one channel 66, 67 that runs from the respective concavity to the base 68 of the former. As described herein, these channels can be used to draw a vacuum in the concavity with which they are associated.

Where more than one concavity is present, the step described with reference to figure 5e may be repeated for each concavity. Once the closer diaphragm 105 has been brought into contact with the forming surface, respective first regions are formed for each concavity. Each first region being defined by the respective concavity and a portion of the closer diaphragm 105. The respective portion of the closer diaphragm 105 being the part which is within where the closer diaphragm 105 contacts with the respective prominence. A vacuum may be drawn within each first region in turn followed by drawing the vacuum in the second region.

Each diaphragm may be of uniform or non-uniform thickness. If the diaphragm is of non-uniform thickness, the effective thickness of the diaphragm may be taken to be its mean thickness.

The diaphragms may be of the same or different compositions. It is preferred that both diaphragms are elastically extensible. Both diaphragms may be elastomeric sheets, for example rubber or silicone sheets. Both diaphragms may be of material having a Young's modulus less than, for example, 10MPa or less than 6MPa or less than 3MPa.

The or each vacuum may be drawn to an absolute pressure of, for example, 200mb or less, or 100mb or less, or 50mb or less. The diaphragm closer to the former may be more elastic than the other diaphragm: i.e. it may be deformed more for a given load.

The apparatus of figure 2 may be installed in any orientation. For example, the operating direction 120 could be vertical, horizontal or inclined. The former 113 could be below, above or offset horizontally from the diaphragms.

In the example of figure 5, the closer diaphragm is first moved into contact with the former by motion of the frames. Then it is drawn into full conformity with the former by drawing a vacuum between it and the former. In another example, the volume between the closer diaphragm and the bed 100 may be airtight even when the closer diaphragm is spaced from the former 113. This may be achieved by the presence of airtight walls extending from the bed to frame 103 when frame 103 is in the position shown in figure 5b. Then the closer diaphragm may be pulled into contact with the former by drawing the required vacuums in that volume.

In the process described herein, the mould body is located under the lower diaphragm and the lower diaphragm is moved into contact with the mould body. This methodology may be varied in several ways. In one variant, the mould body could be moved upwards to contact the lower diaphragm and press the precursor into shape. In another variant, the mould body could be located above the upper diaphragm. Then, once the precursor has been loaded and optionally a vacuum has been drawn between the diaphragms, the precursor can be brought into conformity with the mould surface by moving the diaphragms upwards and/or moving the mould body downwards.

Once the precursor has been set in shape as described above, it can be used in a subsequent forming process. For example, it can be located in a mould, impregnated with resin and the resin cured. The fibres of the precursor can then reinforce the resin. The subsequent forming process may be a resin transfer moulding process. The resin may be impregnated into the shaped precursor under a vacuum. In the case that the precursor is intended to go on to form a structural part of a vehicle (e.g. an automobile tub, an aircraft wing or a boat hull) or a part for another purpose such as a blade for a wind turbine, the structural part of the vehicle may be formed when the resin is impregnated into the shaped precursor. Advantageously, the structural part of a high performance automobile is formed when the resin is impregnated into the shaped precursor.

A single vacuum pump could be provided, and it could be connected by a valve to any or all of outlets 117, 118 and 53.

## Claims

1. A method for forming a fibre article, the method comprising:
providing a former (11; 60) having a contoured forming surface (61), the forming surface comprising a plurality of concavities (13; 62; 63) each surrounded by a prominence (14; 64; 65) and a part of the prominence of one concavity is shared with a part of the prominence of another cavity;
locating a fibre preform (9) between a first diaphragm and a second diaphragm;
drawing a vacuum between the first and second diaphragms (104, 105) so as to hold the preform captive between the diaphragms;
displacing the second diaphragm (105) towards the former so as to bring the second diaphragm into contact with the prominences of the former to seal against the prominences to form respective first regions (50) defined by the respective concavity and a portion of the second diaphragm and a second region (51) defined by the forming surface outside of the concavities and the second diaphragm;
drawing a vacuum in each first region in turn so as to bring part of the second diaphragm into conformity with the concavities;
subsequent to drawing the vacuum in the first region, drawing a vacuum in the second region so as to bring part of the second diaphragm into conformity with the forming surface outside of the concavities; and
setting the preform in its configuration.

2. A method according to claim 1, wherein the former comprises a base (17) and the prominences are further from the base than the concavity.

3. A method according to claim 1 or 2, wherein the prominences have a profile which varies in distance from the concavities.

4. A method according to any preceding claim, wherein bringing the second diaphragm into contact with the prominences of the former causes the second diaphragm to bridge over the concavities to form the first regions.

5. A method according to any preceding claim, wherein the former comprises at least one channel (16; 66; 77) running through the former from each respective concavity, and drawing a vacuum in each respective first region comprises drawing the vacuum through the at least one channel.

6. A method according to claim 5, the method comprising locating the former on a forming platform, the forming platform comprising at least one orifice (52), so that the at least one channel is in fluid communication with the at least one orifice; wherein drawing a vacuum in each respective first region comprises drawing the vacuum through the at least one orifice.

7. A method according to any preceding claim, wherein at the locating step the first diaphragm is offset from the forming surface.

8. A method according to any preceding claim, wherein the preform comprises a heat-activatable binder and the method comprises:
when the precursor located between the first and second diaphragms applying heat to the precursor; and
ceasing to apply heat to the precursor prior to the said displacing step.

9. A method according to any preceding claim, wherein the fibre preform comprises multiple sheets of fibre material laminated into a stack.

10. A method according to claim 9, wherein the or each sheet of fibre material is a sheet of woven fibre material.

11. A method according to any preceding claim, wherein the diaphragms are elastic.

12. A method according to any preceding claim, wherein the preform is part of a structural part of a vehicle.

13. A method according to claim 12, wherein the preform is part of a structural part of an automobile and the structural part is an automobile tub.

14. A method according to claim 12, wherein the preform is part of a structural part of an aircraft.

## Patentansprüche

1. Verfahren zum Bilden eines Faserartikels, das Verfahren umfassend:
Bereitstellen eines Formers (11; 60), der eine konturierte Formgebungsoberfläche (61) aufweist, wobei die Formgebungsoberfläche eine Vielzahl von Konkavitäten (13; 62; 63) umfasst, die jeweils von einer Erhebung (14; 64; 65) umgeben sind, und ein Teil der Erhebung einer Konkavität mit einem Teil der Erhebung einer anderen Kavität geteilt wird;
Anordnen eines Faservorformlings (9) zwischen einer ersten Membran und einer zweiten Membran;
Aufbauen eines Vakuums zwischen der ersten und der zweiten Membran (104, 105), um den Vorformling unverlierbar zwischen den Membranen zu halten;
Verschieben der zweiten Membran (105) in Richtung auf den Former, um die zweite Membran in Kontakt mit den Erhöhungen des Formers zu bringen, um gegen die Erhöhungen abzudichten, um jeweilige erste Bereiche (50), die durch die jeweilige Konkavität und einen Abschnitt der zweiten Membran definiert sind, und einen zweiten Bereich (51), der durch die Formgebungsoberfläche außerhalb der Konkavitäten und der zweiten Membran definiert ist, auszubilden;
Aufbauen eines Vakuums in jedem ersten Bereich der Reihe nach, um einen Teil der zweiten Membran in Übereinstimmung mit den Konkavitäten zu bringen;
nach dem Aufbauen des Vakuums in dem ersten Bereich, Aufbauen eines Vakuums in dem zweiten Bereich, um einen Teil der zweiten Membran in Übereinstimmung mit der Formgebungsoberfläche außerhalb der Konkavitäten zu bringen; und
Einstellen des Vorformlings in seine Konfiguration.

2. Verfahren nach Anspruch 1, wobei der Former eine Basis (17) umfasst und die Erhebungen weiter von der Basis entfernt sind als die Konkavität.

3. Verfahren nach Anspruch 1 oder 2, wobei die Erhebungen ein Profil aufweisen, das im Abstand von den Konkavitäten variiert.

4. Verfahren nach einem der vorhergehenden Ansprüche, wobei das Inkontaktbringen der zweiten Membran mit den Erhebungen des Formers bewirkt, dass die zweite Membran die Konkavitäten überbrückt, um die ersten Bereiche auszubilden.

5. Verfahren nach einem der vorhergehenden Ansprüche, wobei der Former mindestens einen Kanal (16; 66; 77) aufweist, der von jeder jeweiligen Konkavität durch den Former verläuft, und das Aufbauen eines Vakuums in jedem jeweiligen ersten Bereich das Aufbauen des Vakuums durch den mindestens einen Kanal umfasst.

6. Verfahren nach Anspruch 5, wobei das Verfahren das Anordnen des Formers auf einer Formgebungsplattform umfasst, wobei die Formgebungsplattform mindestens eine Öffnung (52) umfasst, sodass der mindestens eine Kanal in Fluidverbindung mit der mindestens einen Öffnung steht; wobei das Aufbauen eines Vakuums in jedem jeweiligen ersten Bereich das Aufbauen des Vakuums durch die mindestens eine Öffnung umfasst.

7. Verfahren nach einem der vorhergehenden Ansprüche, wobei die erste Membran bei dem Anordnungsschritt von der Formgebungsoberfläche versetzt ist.

8. Verfahren nach einem der vorhergehenden Ansprüche, wobei der Vorformling ein wärmeaktivierbares Bindemittel umfasst und das Verfahren Folgendes umfasst:
wenn der Präkursor zwischen den ersten und zweiten Membranen angeordnet ist, Anwenden von Wärme auf den Präkursor; und
Beenden eines Anwendens von Wärme auf den Präkursor vor dem Verschiebungsschritt.

9. Verfahren nach einem der vorhergehenden Ansprüche, wobei der Faservorformling mehrere Lagen aus Fasermaterial umfasst, die zu einem Stapel laminiert sind.

10. Verfahren nach Anspruch 9, wobei die oder jede Lage aus Fasermaterial eine Lage aus gewebtem Fasermaterial ist.

11. Verfahren nach einem der vorhergehenden Ansprüche, wobei die Membranen elastisch sind.

12. Verfahren nach einem der vorhergehenden Ansprüche, wobei der Vorformling Teil eines Strukturteils eines Fahrzeugs ist.

13. Verfahren nach Anspruch 12, wobei der Vorformling Teil eines Strukturteils eines Automobils ist und das Strukturteil eine Automobilwanne ist.

14. Verfahren nach Anspruch 12, wobei der Vorformling Teil eines Strukturteils eines Flugzeugs ist.

## Revendications

1. Procédé de formage d'un article en fibres, le procédé comprenant :
la fourniture d'un gabarit (11 ; 60) ayant une surface de formage profilée (61), la surface de formage comprenant une pluralité de concavités (13 ; 62 ; 63) entourées chacune par une protubérance (14 ; 64 ; 65) et une partie de la protubérance d'une concavité est partagée avec une partie de la protubérance d'une autre cavité ;
le positionnement d'une préforme de fibre (9) entre un premier diaphragme et un deuxième diaphragme ;
la création d'un vide entre les première et deuxième membranes (104, 105) de manière à maintenir la préforme captive entre les membranes ;
le déplacement du deuxième diaphragme (105) vers le gabarit de manière à amener le deuxième diaphragme en contact avec les protubérances du gabarit pour le rendre étanche contre les protubérances afin de former des premières régions respectives (50) définies par la concavité respective et une partie du deuxième diaphragme et une deuxième région (51) définie par la surface de formation à l'extérieur des concavités et du deuxième diaphragme ;
le tirage d'un vide dans chaque première région à son tour afin de mettre une partie du deuxième diaphragme en conformité avec les concavités ;
après l'aspiration du vide dans la première région, l'aspiration du vide dans la deuxième région de manière à amener une partie du deuxième diaphragme en conformité avec la surface de formation à l'extérieur des concavités ; et
la fixation de la préforme dans sa configuration.

2. Procédé selon la revendication 1, dans lequel le gabarit comprend une base (17) et les protubérances sont plus éloignées de la base que la concavité.

3. Procédé selon la revendication 1 ou 2, dans lequel les protubérances ont un profil qui varie en distance à partir des concavités.

4. Procédé selon l'une quelconque des revendications précédentes, dans lequel la mise en contact du deuxième diaphragme avec les protubérances du gabarit amène le deuxième diaphragme à former un pont sur les concavités pour former les premières régions.

5. Procédé selon l'une quelconque des revendications précédentes, dans lequel le gabarit comprend au moins un canal (16 ; 66 ; 77) s'étendant à travers le gabarit à partir de chaque concavité respective, et l'aspiration d'un vide dans chaque première région respective comprend l'aspiration du vide à travers l'au moins un canal.

6. Procédé selon la revendication 5, le procédé comprenant le positionnement du gabarit sur une plateforme de formage, la plateforme de formage comprenant l'au moins un orifice (52), de sorte que l'au moins un canal est en communication de fluide avec l'au moins un orifice ; dans lequel l'aspiration d'un vide dans chaque première région respective comprend l'aspiration du vide à travers l'au moins un orifice.

7. Procédé selon l'une quelconque des revendications précédentes, dans lequel, à l'étape de positionnement, la première membrane est décalée par rapport à la surface de formage.

8. Procédé selon l'une quelconque des revendications précédentes, dans lequel la préforme comprend un liant thermoactivable et le procédé comprend :
lorsque le précurseur situé entre les premier et deuxième diaphragmes applique de la chaleur au précurseur ; et
le fait de cesser l'application de chaleur au précurseur avant ladite étape de déplacement.

9. Procédé selon l'une quelconque des revendications précédentes, dans lequel la préforme de fibres comprend de multiples feuilles de matériau de fibres stratifiées en un empilement.

10. Procédé selon la revendication 9, dans lequel la ou chaque feuille de matériau de fibres est une feuille de matériau de fibres tissées.

11. Procédé selon l'une quelconque des revendications précédentes, dans lequel les membranes sont élastiques.

12. Procédé selon l'une quelconque des revendications précédentes, dans lequel la préforme fait partie d'une partie structurelle d'un véhicule.

13. Procédé selon la revendication 12, dans lequel la préforme fait partie d'une partie structurelle d'une automobile et la partie structurelle est une caisse d'automobile.

14. Procédé selon la revendication 12, dans lequel la préforme fait partie d'une partie structurelle d'un aéronef.
